# EUROPÄISCHE PATENTANMELDUNG

(11) **EP 3 699 701 A1**
(43) Veröffentlichungstag der Anmeldung: **26.08.2020**
(21) Anmeldenummer: 19159055.3
(22) Anmeldetag: 25.02.2019
(51) Int. Cl.: G05B 19/406

(54) **VERFAHREN UND VORRICHTUNG ZUR BESTIMMUNG ODER VORHERSAGE EINER POSITION EINES BAHNABRISSES, COMPUTERPROGRAMM UND INDUSTRIELLE ANLAGE**

(71) Anmelder: Siemens Aktiengesellschaft, 80333 München (DE)
(72) Erfinder: Grießinger, Konrad Moritz, 76133 Karlsruhe (DE); Osterburg, Sarah, 12055 Berlin (DE)

(57) **Zusammenfassung**

Die Erfindung betrifft ein Verfahren und eine Vorrichtung, insbesondere zur Vorhersage einer Position eines erfolgten oder drohenden Bahnabrisses (BA) einer faserhaltigen Warenbahn (1). Darüber hinaus betrifft die Erfindung ein Computerprogrammprodukt und eine industrielle Anlage (100), insbesondere eine Papiermaschine. Das Verfahren umfasst die Erfassung von Parametern (x1,x2,x3), insbesondere Drehzahlen (w) von Rollen (3,3') zum Transport der faserhaltigen Warenbahn (1) oder eine Bahnspannung (BS) derselben. Die Parameter (x1,x2,x3) werden vorteilhaft in Form von Zeitreihen (A,B,C) hinterlegt. Ein selbstlernender Algorithmus (Alg) dient zum Erkennen des drohenden Bahnabrisses (BA) sowie zu einer Ermittlung der Position des drohenden und/oder erfolgten Bahnabrisses (BA). Grundlage für das Erkennen oder die Ermittlung ist eine Abweichung (Δ) des jeweiligen Parameters (x1,x2,x3), beispielhaft von einem zeitlichen Mittelwert (<x1>,<x2>,<x3>) des jeweiligen Parameters (x1,x2,x3).

## Beschreibung

Die Erfindung betrifft ein Verfahren und eine Vorrichtung, insbesondere zur Bestimmung und Vorhersage einer Position eines erfolgten oder drohenden Bahnabrisses einer faserhaltigen Warenbahn. Weiter betrifft die Erfindung ein Computerprogrammprodukt und eine industrielle Anlage.

Industrielle Anlagen zur Herstellung und/oder Bearbeitung einer faserhaltigen Warenbahn sind beispielhaft Papiermaschinen oder Druckmaschinen. Bei der Herstellung oder der Bearbeitung der faserhaltigen Warenbahn kommt es immer wieder zu einem Riss der faserhaltigen Warenbahn, einem sogenannten Bahnabriss.

Nach einem Bahnabriss muss in der Regel die industrielle Anlage gestoppt und gewartet werden.

Um die Zeit für den Stopp der industriellen Anlage möglichst gering zu halten, ist es vorteilhaft, die Position des Bahnabrisses in der industriellen Anlage zu kennen.

Darüber hinaus erscheint es vorteilhaft, dass solche Bahnabrisse gar nicht erst auftreten.

Demnach ist es Aufgabe der Erfindung, Stillstandzeiten bei einer industriellen Anlage zu vermeiden oder zumindest zu verkürzen.

Diese Aufgabe wird durch ein Verfahren nach Anspruch 1 gelöst. Diese Aufgabe wird weiter durch eine Vorrichtung nach Anspruch 15 gelöst. Darüber hinaus wird die Aufgabe durch ein Computerprogramm gemäß Anspruch 16 und durch eine industrielle Anlage gemäß Anspruch 17 gelöst.

Vorteilhafte Ausgestaltungen der Erfindung sind Gegenstand der abhängigen Ansprüche.

Das Verfahren dient insbesondere zur Bestimmung und Vorhersage einer Position eines erfolgten oder drohenden Bahnabrisses einer faserhaltigen Warenbahn in einer industriellen Anlage, wobei die industrielle Anlage eine Mehrzahl von Rollen aufweist, wobei die Rollen zum Transport der faserhaltigen Warenbahn in der industriellen Anlage vorgesehen sind, wobei das Verfahren zumindest folgende erste Schritte umfasst:
- Bereitstellung und optional Hinterlegung von Parametern, wobei der jeweilige Parameter jeweils zumindest einer Rolle zugeordnet ist;
- Überprüfen, ob ein Parameter im zeitlichen Verlauf einer vorgebbaren Verteilung, insbesondere einer Normalverteilung, entspricht;
- Entspricht der zeitliche Verlauf des jeweiligen Parameters der vorgebbaren Verteilung, wird ein weiterer Parameter auf die Verteilung geprüft;
- Entspricht der zeitliche Verlauf des weiteren Parameters nicht der vorgebbaren Verteilung, so erfolgt eine Überprüfung des zeitlichen Verlaufes des Parameters auf eine erste Abweichung hin.

Vorteilhaft werden im Rahmen des Verfahrens die Parameter auf eine Differenz von der vorgebbaren Verteilung hin untersucht. Vorteilhaft wird der jeweilige Parameter periodisch wiederkehrend auf eine Differenz bezüglich der vorgebbaren Verteilung hin überprüft.

Die Parameter werden vorteilhaft von einem Sensor oder einem Geber ermittelt. Die Parameter können auch von einer Steuereinrichtung für den jeweiligen Motor bereitgestellt werden. Vorteilhaft werden die Parameter in Form einer Zeitreihe auf einem Datenspeicher hinterlegt. Der Datenspeicher kann lokal ausgebildet sein oder einer dezentralen Recheneinheit, beispielhaft einer Cloud, zugeordnet sein.

Vorteilhaft werden Parameter bestimmt, welche eine (Dreh-) Bewegung einer Rolle abbilden. Beispielhaft ist ein Parameter die Drehzahl der jeweiligen Rolle, das Drehmoment, welches der Motor zur Drehung der Rolle aufbringen muss und/oder eine Position der jeweiligen Rolle, insofern die Rolle in ihrer Position verschiebbar ist.

Die Parameter werden jeweils vorteilhaft als Zeitreihen hinterlegt.

Die vorgebbare Verteilung kann eine Gauß-Verteilung oder eine sonstige statistische Normalverteilung sein.

Bei dem Verfahren werden die Parameter jeweils vorteilhaft mit einem Zeitstempel hinterlegt. Durch den jeweiligen Zeitstempel können die Parameter als Zeitreihen miteinander verglichen werden.

In der Regel ist der jeweilige Parameter, wie eine Drehzahl oder ein Drehmoment eines Motors, mit einem Rauschen beaufschlagt. Ein Rauschen bedeutet, dass der Wert des jeweiligen Parameters als Funktion der Zeit schwankt. Die Schwankung ist jedoch derart, dass die Werte gemäß einer Normalverteilung, insbesondere einer Gaußverteilung, um einen Mittelwert herum schwanken. Daher erfolgt eine Prüfung, ob sich die Schwankung des jeweiligen Parameters im Rahmen der Verteilung verhält.

Vorteilhaft werden alle bereitgestellten Parameter auf eine vorgebbare Verteilung geprüft. Durch die Prüfung kann ermittelt werden, ob die Schwankung aufgrund eines drohenden oder erfolgten Bahnabrisses auftritt oder es sich um eine "normale" Schwankung im Rahmen einer vorgebbaren Verteilung handelt.

Sollte der Parameter, insbesondere der zeitliche Verlauf des Parameters, von der vorgebbaren Verteilung abweichen, wird der Parameter weiter auf eine erste Abweichung hin untersucht.

Der Parameter, dessen zeitlicher Verlauf sich nicht gemäß einer vorgebbaren Verteilung verhält, kann auf die zweite Abweichung hin untersucht werden. Eine zweite Abweichung ist beispielsweise ein Peak im zeitlichen Verlauf des jeweiligen Parameters. Hierbei kann der zeitliche Verlauf des jeweiligen Parameters bezüglich einer zweiten Abweichung des Parameters von seinem zeitlichen Mittelwert hin untersucht werden. Alternativ oder zusätzlich kann eine erste Abweichung eine veränderte Differenz zwischen jeweils zwei Parametern sein.

Insbesondere erfolgt eine Untersuchung einer zeitlichen Änderung des jeweiligen Parameters.

Vorteilhaft erfolgt bei Erkennen einer Abweichung eines Parameters eine Zuweisung der Rolle, die dem jeweiligen Parameter zugeordnet ist. Durch das Ermitteln der Rolle kann die Position des Bahnabrisses in der industriellen Anlage über die Position der jeweilig ermittelten Rolle schnell und sicher festgestellt werden.

Von einem drohenden oder erfolgten Bahnabriss kann ausgegangen werden, falls die erste Abweichung einen Grenzwert überschreitet.

Mit Hilfe des Verfahrens kann in besonders effizienter Weise eine große Anzahl von Parametern auf eine Abweichung hin untersucht werden. So kann im Falle eines Bahnabrisses der faserhaltigen Warenbahn die Position des Bahnabrisses schnell und sicher ermittelt werden.

Vorteilhaft läuft das Verfahren während des Betriebes der industriellen Anlage ab und untersucht die ermittelten Parameter zumindest unregelmäßig. So kann die erste Abweichung eines Parameters schnell und sicher ermittelt werden. Die erkannte erste Abweichung bildet vorteilhaft die Grundlage für das Erkennen eines drohenden Bahnabrisses in der industriellen Anlage.

Bei einer vorteilhaften Ausgestaltung der Erfindung umfasst das Verfahren folgende zweite Schritte:
- Bestimmung einer zweiten Abweichung zumindest eines Parameters oder einer zeitlichen Änderung des jeweiligen Parameters;
- Vergleich des jeweiligen Parameters und/oder der jeweiligen zeitlichen Änderung des jeweiligen Parameters mit jeweils einem vorgebbaren Grenzwert;
- Wobei mit Hilfe eines lernfähigen Algorithmus die zweite Abweichung erkannt wird und/oder die zweite Abweichung zumindest eine Rolle für den erfolgten oder drohenden Bahnabriss der faserhaltigen Warenbahn zugeordnet wird.

Vorteilhaft laufen erste Schritte und zweite Schritte zur Bestimmung einer Position eines erfolgten oder drohenden Bahnabrisses ab.

Vorteilhaft wird der jeweilige Parameter auf eine erste Abweichung hin untersucht, wobei sich der jeweilige Parameter nicht notwendigerweise durch einen Vergleich mit einer vorgebbaren Verteilung als signifikant zur Bestimmung einer Position eines Bahnabrisses herausgestellt hat.

Demnach kann eine zweite Abweichung auch als Abweichung des jeweiligen Parameters über eine übliche Schwankung des jeweiligen Parameters hinaus sein.

Eine zweite Abweichung ist beispielhaft eine Abweichung des jeweiligen Parameters von einem zeitlichen Mittelwert des jeweiligen Parameters über eine geringe Schwankungsbreite des Parameters hinaus. Darüber hinaus kann ein Kriterium für eine erste und zweite Abweichung sein, dass der jeweilige Parameter für zumindest eine Zeitdauer die Abweichung von dem zeitlichen Mittelwert des jeweiligen Parameters zeigt. Eine solche Zeitdauer dauert vorzugsweise 1 Millisekunde bis 1 Sekunde.

Zur Entscheidung, ob ein Parameter eine Abweichung von einem zeitlichen Mittelwert aufweist, dient ein Grenzwert. Der Grenzwert kann 1% bis 10 % des jeweiligen Parameters sein.

Bei Überschreiten des Parameters über die Zeitdauer hinaus kann eine zweite Abweichung des jeweiligen Parameters erfasst werden.

Eine Rolle der industriellen Anlage ist in der Regel einem Parameter zugeordnet. Da in der Regel die Position der jeweiligen Rolle in der industriellen Anlage bekannt ist, kann eine Zuordnung eines drohenden oder bereits erfolgten Bahnabrisses der faserhaltigen Warenbahn schnell und sicher erfolgen.

Vorteilhaft erfolgt die Erkennung der zweiten Abweichung mit Hilfe eines lernfähigen Algorithmus. Vorzugsweise kann auch die erste Abweichung mit Hilfe eines lernfähigen Algorithmus erkannt werden.

Vorzugsweise kann der lernfähige Algorithmus die Zeitdauer bereitstellen, welche eine Abweichung andauert, um nicht als zufällige Abweichung / Rauschen klassifiziert werden. Alternativ oder zusätzlich kann die vorgebbare Verteilung mit Hilfe des lernfähigen Algorithmus angepasst werden.

Der lernfähige Algorithmus wird vorteilhaft mit Hilfe der jeweils bereitgestellten Parameter, der jeweils ermittelten Abweichung sowie mit Hilfe von Informationen von erfolgten Bahnabrissen angelernt.

Als lernfähiger Algorithmus eignet sich ein Neuronales Netz, eine Support Vector Machine oder ein sonstiger, auf Künstlicher Intelligenz (KI) basierter Algorithmus, insbesondere ein Random-Forrest Tree. Vorteilhaft können sowohl überwachte als auch unüberwachte lernfähige Algorithmen vorgesehen sein.

Der selbstlernende Algorithmus ist vorzugsweise dazu ausgebildet, Auffälligkeiten in dem jeweiligen Parameter ausfindig zu machen, die sich vom normalen Betrieb der industriellen Anlage unterscheiden.

Vorteilhaft werden dem selbstlernenden Algorithmus Zeitreihen der jeweiligen Parameter bereitgestellt. Anhand der Zeitreihen ermittelt der selbstlernende Algorithmus erste Abweichungen und/oder zweite Abweichungen. Den jeweiligen Abweichungen der Parameter ist das jeweilige Verhalten der jeweiligen Rolle zugeordnet.

Insbesondere mit Hilfe des selbstlernenden Algorithmus kann ein solches Verfahren weitgehend autark agieren, so dass ein Bediener der industriellen Anlage entlastet werden kann.

Bei einer weiteren vorteilhaften Ausgestaltung der Erfindung werden die erste Abweichung des jeweiligen Parameters mit den ersten Schritten und die zweite Abweichung mit Hilfe der zweiten Schritte ermittelt, wobei mit Hilfe der ersten Abweichung eine erste Position des erfolgten oder drohenden Bahnabrisses ermittelt wird und wobei mit Hilfe der zweiten Abweichung eine zweite Position des drohenden oder erfolgten Bahnabrisses ermittelt wird, wobei bei Übereinstimmung der ersten Position und der zweiten Position die jeweilige Position einem Benutzer angezeigt wird.

Vorteilhaft erfolgt der Ablauf von ersten Schritten und von zweiten Verfahrensschritten anhand der selben Parameter. Vorteilhaft laufen die ersten Schritte in einem ersten Teil eines Computerprogramms und zweite Schritte in einem zweiten Teil des Computerprogramms ab.

Insofern die ersten Schritte und die zweiten Schritte jeweils unterschiedliche Rollen oder eine unterschiedliche Position eines erfolgten oder drohenden Bahnabrisses ermitteln, kann dem selbstlernenden Algorithmus die tatsächliche Position des Bahnabrisses bereitgestellt werden. Die Bereitstellung erfolgt mit dem Ziel, das Anlernen des selbstlernenden Algorithmus zu verbessern.

Durch den verbesserten lernfähigen Algorithmus können unterschiedliche Positionen des Bahnabrisses vermindert werden.

Insofern die Position des drohenden oder erfolgten Bahnabrisses der faserhaltigen Warenbahn übereinstimmt, so kann diese Position dem Bediener der industriellen Anlage angezeigt werden.

Bei einer weiteren vorteilhaften Ausgestaltung der Erfindung erfolgt, falls die erste Position und die zweite Position eines erfolgten Bahnabrisses unterschiedlich sind, eine Ermittlung der Position des Bahnabrisses, vorzugsweise mit Hilfe einer visuellen Überwachung, wobei die ermittelte Position des erfolgten Bahnabrisses dem lernfähigen Algorithmus bereitgestellt wird, so dass der lernfähige Algorithmus anhand der Position des erfolgten Bahnabrisses verbessert wird.

Eine visuelle Überwachung kann mit Hilfe von einem oder mehreren Kameramodulen oder sonstigen Sensoren erfolgen, welche auf die faserhaltige Warenbahn gerichtet sind.

Alternativ oder zusätzlich kann eine visuelle Überwachung durch einen Bediener erfolgen.

Die durch die visuelle Überwachung ermittelte Position des Bahnabrisses wird vorteilhaft dem selbstlernenden Algorithmus bereitgestellt, um eine Ermittlung der Position eines drohenden oder erfolgten Bahnabrisses zu verbessern. Insbesondere kann die vorteilhafte Höhe eines Grenzwertes für eine erste und/oder zweite Abweichung verbessert werden.

Durch die Rückspeisung der Information der visuell ermittelten Position des Bahnabrisses kann der selbstlernende Algorithmus verbessert werden.

Bei einer weiteren vorteilhaften Ausgestaltung der Erfindung werden dem lernfähigen Algorithmus die Parameter, die ermittelte Position des erfolgten Bahnabrisses und/oder die jeweils ermittelte erste und/oder zweiten Abweichung bereitgestellt.

Vorteilhaft werden sämtliche Parameter in Form von Zeitreihen dem selbstlernenden Algorithmus bereitgestellt.

Bevorzugt werden lediglich diejenigen Parameter dem selbstlernenden Algorithmus bereitgestellt, welche nicht der vorgebbaren Verteilung entsprechen.

Vorteilhaft werden die Parameter, die nicht der vorgebbaren Verteilung entsprechen, als Zeitreihen dem selbstlernenden Algorithmus bereitgestellt

Durch den Vergleich der jeweiligen Parameter und der Information des jeweiligen Bahnabrisses mit den Parametern kann der lernfähige Algorithmus schnell und effizient angelernt werden. Durch einen effizient angelernten Algorithmus kann eine schnelle und sichere Bestimmung der Position des drohenden oder erfolgten Bahnabrisses erfolgen.

Bei einer weiteren vorteilhaften Ausgestaltung der Erfindung laufen zur Feststellung eines drohenden Bahnabrisses die ersten Schritte und/oder die zweiten Schritte wiederholt, insbesondere periodisch, ab.

Insbesondere um einen drohenden Bahnabriss der faserhaltigen Warenbahn während des Betriebes der industriellen Anlage zu erkennen, werden die ermittelten und bereitgestellten Parameter vorteilhaft laufend mit Hilfe der ersten und/oder zweiten Schritte untersucht.

Vorteilhaft werden alle Parameter wiederholt auf die vorgebbare Verteilung hin untersucht. Vorteilhaft erfolgt eine Untersuchung der Parameter mit Hilfe der ersten und zweiten Schritte.

Vorzugsweise werden die ersten und/oder zweiten Schritte periodisch wiederkehrend ausgeführt, solange die industrielle Anlage in Betrieb ist.

Durch die laufende Überwachung des jeweiligen Parameters kann vorteilhaft ein drohender Bahnabriss wirksam erkannt werden.

Bei einem bereits erfolgten Bahnabriss kann durch die nachfolgende Analyse der Parameter eine genaue Position des Bahnabrisses ermittelt werden.

Bei einer weiteren vorteilhaften Ausgestaltung der Erfindung werden zur Feststellung der Position des erfolgten Bahnabrisses die ersten Schritte und/oder die zweiten Schritte nach dem erfolgten Bahnabriss durchgeführt.

Alternativ oder zusätzlich zur Überwachung während der Betriebszeit der industriellen Anlage erfolgt bei einem Bahnabriss eine gesonderte Untersuchung der Parameter in einem Zeitbereich vor dem Bahnabriss. Die gesonderte Untersuchung erfolgt mit den ersten und/oder zweiten Schritten.

Vorteilhaft kann mit einer genauen Untersuchung nach einem erfolgten Bahnabriss der selbstlernende Algorithmus in seiner Effizienz gesteigert werden.

Bei einer weiteren vorteilhaften Ausgestaltung der Erfindung wird der jeweilig hinterlegte Parameter in einem Zeitbereich auf eine erste Abweichung hin untersucht, wobei der Zeitbereich unmittelbar vor dem erfolgten Bahnabriss angeordnet ist.

Der Zeitbereich kann 1 bis 10 Minuten betragen.

Vorteilhaft erfolgt eine Untersuchung der Parameter in einem Zeitbereich, wobei vorteilhaft das Ende des Zeitbereichs mit dem Bahnabriss zusammenfällt.

Die Untersuchung erfolgt vorzugsweise mit ersten Schritten und/oder mit zweiten Schritten. Die ersten und zweiten Schritte können beide parallel ablaufen.

Durch eine Untersuchung des jeweiligen Parameters lediglich in dem Zeitbereich vor dem erfolgten Bahnabriss wird vorteilhaft Rechenleistung eingespart.

Bei einer weiteren vorteilhaften Ausgestaltung der Erfindung wird die Abweichung des jeweiligen Parameters anhand einer Differenz des jeweiligen Parameters von jeweils einem zeitlichen Mittelwert des jeweiligen Parameters bestimmt.

Ein zeitlicher Mittelwert des jeweiligen Parameters kann bestimmt werden, indem der Parameter über die Betriebszeit integriert wird und dann durch die Betriebszeit dividiert wird.

In der Regel ist ein Parameter wie eine Drehzahl einer Rolle während des Betriebes der industriellen Anlage weitgehend konstant. Eine Abweichung von dem konstanten Wert, der durch seinen zeitlichen Mittelwert bestimmbar ist, deutet demnach auf einen drohenden Bahnabriss hin. Eine Abweichung kann auch durch den Wechsel der Papiersorte bzw. einem Wechsel des Betriebsmodus der industriellen Anlage begründet sein. Die sollte vorteilhaft im Rahmen des hier beschriebenen Verfahrens berücksichtigt werden

Gegebenenfalls nimmt eine Mehrzahl von Parametern gemeinsam zu. Beispielweise können jeweils benachbarte Rollen gemeinsam eine höhere Drehzahl annehmen, ohne dass die Gefahr eines Bahnabrisses zwischen den Rollen ansteigt. Ein solches Problem kann durch eine Betrachtung der Bahnspannung als Parameter vermieden werden.

Durch die Betrachtung der Abweichung des jeweiligen Parameters von seinem zeitlichen Mittelwert kann schnell und einfach eine Fehlfunktion einer Rolle oder eines zugehörigen Antriebes ermittelt werden.

Bei einer weiteren vorteilhaften Ausgestaltung der Erfindung ist der jeweilige Parameter einer Mehrzahl von Rollen zugeordnet, wobei der jeweilige Parameter die Bewegung jeweils benachbarter Rollen abbildet.

Ein solcher Parameter kann eine Bahnspannung der faserhaltigen Warenbahn zwischen zwei benachbarten Rollen sein. Die Bahnspannung kann proportional zu einer Differenz der Drehzahlen der jeweils benachbarten Rollen sein.

Durch die Betrachtung von Parametern, welche beispielhaft eine Differenz der Bewegung von Rollen beschreiben, können Abweichungen besonders einfach ermittelt werden.

Bei einer weiteren vorteilhaften Ausgestaltung der Erfindung erfolgt ein Anlernen des lernfähigen Algorithmus anhand eines Vergleiches des jeweiligen Parameters in einem Zeitbereich vor einem erfolgten Bahnabriss mit dem jeweiligen Parameter in einem Zeitbereich während eines Normalbetriebes der industriellen Anlage.

Bei dieser Ausgestaltung wird vorteilhaft die Verteilung und/oder der zeitliche Mittelwert des jeweiligen Parameters während dem Normalbetrieb der industriellen Anlage bestimmt.

Zur Verbesserung des Verfahrens kann der zeitliche Verlauf des jeweiligen Parameters in dem Zeitbereich vor dem Bahnabriss mit dem zeitlichen Mittelwert verglichen werden.

Durch diese Ausgestaltung erfolgt ein schnelles und effizientes Anlernen des lernfähigen Algorithmus.

Bei einer weiteren vorteilhaften Ausgestaltung der Erfindung ist der jeweilige Parameter:
- Eine Drehzahl oder ein Drehmoment der jeweiligen Rolle oder eines Motors, der mit der jeweiligen Rolle gekoppelt ist;
- eine Bahnspannung der faserhaltigen Warenbahn zwischen einer ersten Rolle und einer zweiten Rolle;
- eine Differenz von Drehzahlen zweier Rollen;
- ein Versorgungsstrom oder die Frequenz des Versorgungsstroms des Motors, welcher mit der jeweiligen Rolle gekoppelt ist;
- ein Regelungsparameter für den jeweiligen Motor.

Vorteilhaft werden Rollen betrachtet, welche im Rahmen des Transports der faserhaltigen Warenbahn jeweils benachbart sind.

Die Bahnspannung kann aus der Differenz von Drehzahlen der jeweiligen Rollen bestimmt werden, zwischen welchen die Bahnspannung bestimmt werden soll.

Vorzugsweise wird die Bahnspannung zusätzlich mit Hilfe einer Zugmessdose bestimmt, wobei die Zugmessdose als ein Sensor für die Bahnspannung der faserhaltigen Warenbahn ausgebildet ist.

Bei einer weiteren vorteilhaften Ausgestaltung der Erfindung wird die zweite Abweichung lediglich nach dem erfolgten Bahnabriss bestimmt, wobei die erste Abweichung wiederholt, vorzugsweise periodisch wiederholt, bestimmt wird.

Eine erste Abweichung dient vorzugsweise zur Bestimmung von kurzfristigen Abweichungen des jeweiligen Parameters von seinem zeitlichen Mittelwert. Eine erste Abweichung führt nicht notwendig zu einem Bahnabriss. Eine erste Abweichung eines Parameters von dem zeitlichen Mittelwert kann jedoch die Wahrscheinlichkeit für einen Bahnabriss erhöhen. Somit erfolgen die ersten Schritte zur Ermittlung der ersten Abweichung während des Betriebs der industriellen Anlage. Eine Bestimmung der zweiten Abweichung erfolgt vorteilhaft zur Vorhersage eines drohenden Bahnabrisses.

Die Bestimmung der zweiten Abweichung dient vorteilhaft zur Bestimmung von einer längeren Abweichung des jeweiligen Parameters von seinem zeitlichen Mittelwert. Zweite Abweichungen sind oft ein Indikator für einen Bahnabriss. Durch Feststellung der zweiten Abweichung bei einem Parameter kann anhand des Parameters die Rolle ermittelt werden, welche dem Parameter zugeordnet ist. Anhand der Position der entsprechenden Rolle in der industriellen Anlage kann die Position des Bahnabrisses leicht ermittelt werden.

Bei einer weiteren vorteilhaften Ausgestaltung der Erfindung ist zumindest eine erste Rolle einer ersten Gruppe zugeordnet, wobei zumindest eine zweite Rolle einer zweiten Gruppe zugeordnet ist,
- wobei eine erste und/oder zweite Abweichung des Parameters der zumindest einen ersten Rolle bestimmt wird;
- wobei eine erste und/oder zweite Abweichung des Parameters der zumindest einen zweiten Rolle bestimmt wird;
- und/oder wobei eine erste und/oder zweite Abweichung der Parameter der zumindest einen ersten Rolle von der zumindest einen zweiten Rolle bestimmt wird.

Vorzugsweise werden Rollen einer Trockeneinheit zu einer Gruppe zusammengefasst. Die Rollen in der jeweiligen Gruppe weisen oft eine im Wesentlichen gleiche Drehzahl oder ein im Wesentlichen gleiches Drehmoment auf.

In der Regel treten Bahnabrisse der faserhaltigen Warenbahn an Stellen auf, welche außerhalb der jeweiligen Gruppen von Rollen sind. In Bezug zu einer Papiermaschine stellt eine Gruppe vorteilhaft jeweils eine Trockenpartie dar, wobei die faserhaltige Warenbahn eine Mehrzahl solcher Trockenpartien durchläuft, bis eine Wickelvorrichtung die faserhaltige Warenbahn auf eine Rolle aufwickelt.

Vorteilhaft werden die Rollen als Gruppe zusammengefasst, wobei in einem ersten Durchlauf der ersten Schritte und/oder der zweiten Schritte die Gruppe von Rollen wie eine einzelne Rolle behandelt wird, d.h. der jeweiligen Gruppe wird ein Parameter zugeordnet.

Die Zusammenfassung der Rollen in Gruppen, wobei die Rollen in der jeweiligen Gruppe ein im Wesentlichen gleiches Verhalten zeigen, vermindert den Aufwand zur Bestimmung von ersten und zweiten Abweichungen erheblich.

Die Vorrichtung dient insbesondere zur Bestimmung eines erfolgten oder drohenden Bahnabrisses einer faserhaltigen Warenbahn in einer industriellen Anlage. Die Vorrichtung umfasst:
- Erfassungsmittel für Parameter, wobei der jeweilige Parameter zur Beschreibung der Bewegung zumindest einer Rolle ausgebildet ist;
- eine Anzeige zum Anzeigen des drohenden oder erfolgten Bahnabrisses;
Wobei der Vorrichtung eine Recheneinheit zugeordnet ist, wobei die Recheneinheit zur Bestimmung der Position eines drohenden oder erfolgten Bahnabrisses mit Hilfe eines Verfahrens gemäß einem vorstehend beschriebenen Verfahren ausführbar ist.

Die Vorrichtung ist vorteilhaft als Steuereinrichtung für eine industrielle Anlage, insbesondere für einen Teil einer Papiermaschine, ausgebildet.

Ein Erfassungsmittel für einen Parameter ist beispielhaft ein Sensor zur Bestimmung eines Drehmoments, ein Geber zur Bestimmung einer Drehzahl, ein Sensor zur Bestimmung einer Bahnspannung der faserhaltigen Warenbahn, insbesondere als Zugmessdose ausgebildet.

Alternativ oder zusätzlich kann ein Erfassungsmittel eine Schnittstelle zur Erfassung einer Drehzahl sein, wobei die Schnittstelle einer Stromversorgung des jeweiligen Motors zugeordnet ist.

Darüber hinaus kann die Schnittstelle ein Sensor für eine Spannung oder einen Strom sein, der dem jeweiligen Motor bereitgestellt wird.

Die Anzeige kann als Bildschirm ausgebildet sein, wobei der Bildschirm vorzugsweise einem Leitstand zugeordnet ist.

Die Anzeige ist vorteilhaft mit der Recheneinheit verbunden, wobei die Recheneinheit zur Durchführung der ersten Schritte und/oder der zweiten Schritte ausgebildet ist. Die Recheneinheit kann als Edge-Device oder als dezentraler Server ausgebildet sein.

Vorteilhaft erfolgt eine Anzeige eines Abbildes der industriellen Anlage, wobei die Rollen und deren Position gekennzeichnet sind. Durch die Kennzeichnung der jeweiligen Rolle oder der jeweiligen Rollen, bei oder zwischen denen der Bahnabriss erfolgt ist oder droht, kann die Position des erfolgten oder drohenden Bahnabrisses auf einen Blick ermittelt werden.

Das Computerprogrammprodukt ist zum Ablauf auf einer Recheneinheit vorgesehen, wobei das Computerprogrammprodukt beim Ablauf auf einer Recheneinheit zur Durchführung des vorstehenden Verfahrens ausgebildet ist.

Das Computerprogrammprodukt ist vorteilhaft in einen Arbeitsspeicher einer Recheneinheit überführbar und von dort aus mit Hilfe zumindest einer CPU ausführbar. Das Computerprogrammprodukt ist vorteilhaft auf einem Datenspeicher wie einem USB-Stick, einer Festplatte oder einer CD-ROM / DVD-ROM speicherbar und von dort aus auf der Recheneinheit abrufbar oder installierbar.

Das Computerprogramm weist vorteilhaft zumindest eine Eingangsschnittstelle für den jeweiligen Parameter auf. Weiter umfasst das Computerprogrammprodukt vorteilhaft Ausgangsschnittstellen zur Bereitstellung der Position des drohenden oder erfolgten Bahnabrisses.

Darüber hinaus umfasst das Computerprogramm vorteilhaft eine Schnittstelle zur Verbindung mit einem Datenspeicher zur Hinterlegung der Parameter und/oder zum Einlesen der jeweiligen Parameter. Die Parameter sind vorteilhaft in einer Datenbank hinterlegt.

Die industrielle Anlage ist vorzugsweise als eine Trockenpartie einer Papiermaschine oder eine Papiermaschine, ausgebildet. Die industrielle Anlage umfasst vorteilhaft eine Vorrichtung gemäß der vorstehenden Beschreibung.

Im Folgenden wird die Erfindung anhand von Figuren näher beschrieben und erläutert. Die in den Figuren gezeigten Merkmale können zu neuen Ausführungsformen der Erfindung zusammengefügt werden. Die Ausführungsformen sind lediglich beispielhaft und schränken die Erfindung keinesfalls ein.

Es zeigen:
- FIG 1: eine beispielhafte industrielle Anlage,
- FIG 2: ein schematisches Verfahren,
- FIG 3: ein weiteres beispielhaftes Verfahren,
- FIG 4: ein weiteres beispielhaftes Verfahren,
- FIG 5: Zeitreihen von Parametern.

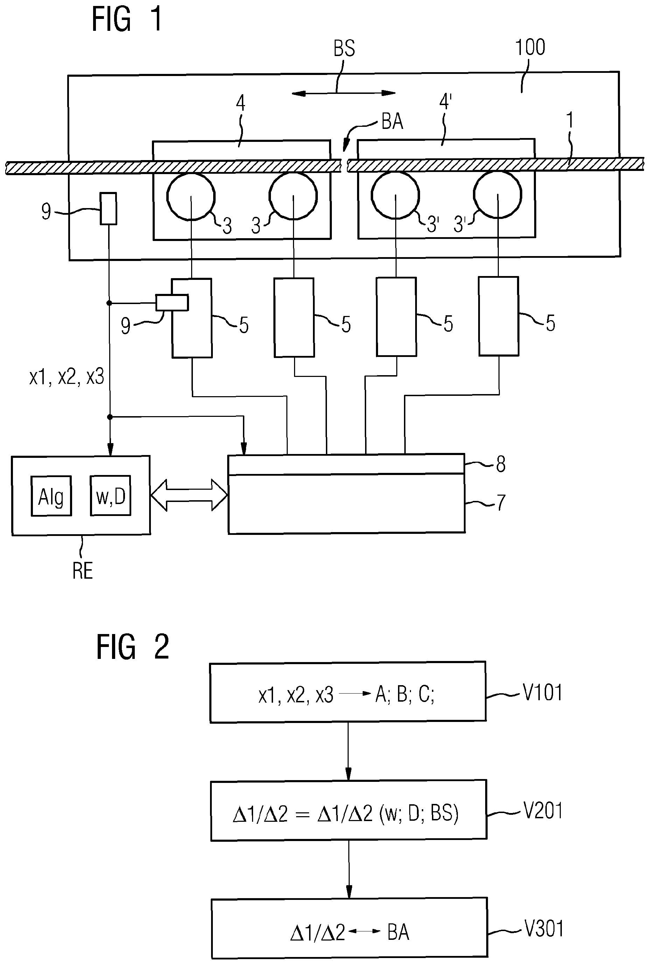

**FIG 1** zeigt eine beispielhafte industrielle Anlage 100. Die Anlage umfasst Rollen 3, 3', wobei die Rollen 3,3' zum Transport einer faserhaltigen Warenbahn 1, insbesondere einer Papierbahn, ausgebildet sind. Der jeweiligen Rolle 3,3' ist jeweils ein Motor 5 zugeordnet. Der Motor 5 dient zur Drehbewegung der jeweils zugeordneten Rolle 3,3'. Zur Bestimmung der Parameter x1,x2,x3, beispielhaft der Drehzahl w, dem Drehmoment D einer Rolle 3,3' oder der Bahnspannung BS der faserhaltigen Warenbahn 1 dienen Sensoren 9. Das jeweilige Erfassungsmittel 9 kann als Geber oder als Sensor ausgebildet sein. Das Erfassungsmittel kann einer Rolle 3,3' oder einem Motor 5 zugeordnet sein.

Die hier gezeigte industrielle Anlage umfasst erste Rollen 3, wobei die ersten Rollen in einer ersten Gruppe 4 zusammengefasst sind. Die hier gezeigte industrielle Anlage 100 umfasst darüber hinaus zweite Rollen 3', wobei die zweiten Rollen 3' einer zweiten Gruppe 4 zugeordnet sind.

Vorteilhaft weisen die ersten Rollen als Parameter x1,x2,x3 im wesentlichen gleiche Werte auf. Demnach erfolgt ein Bahnabriss BA der faserhaltigen Warenbahn 1 zwischen jeweils benachbarten ersten Rollen 3 und zweiten Rollen 3'.

Die Motoren 5 sind jeweils mit einer Stromversorgung 8 verbunden. Die Stromversorgung 8 ist vorteilhaft als Frequenzumrichter ausgebildet. Die Stromversorgung 8 ist mit einer Steuereinrichtung 7 gekoppelt. Die Steuereinrichtung dient zur Steuerung und/oder Regelung der Drehmomente D, der Drehzahl w der jeweiligen Rolle 3,3'.

Der Steuereinrichtung 7 ist eine Recheneinheit RE zugeordnet. Die Recheneinheit umfasst ein Interface zur Aufnahme der Parameter x1,x2,x3. Vorteilhaft werden anhand der Parameter x1,x2,x3 die Drehzahlen w der jeweiligen Rolle 3,3' und/oder deren Drehmomente D in der Recheneinheit RE hinterlegt. Alternativ oder zusätzlich ist der Recheneinheit RE eine weitere Recheneinheit zugeordnet. Die weitere Recheneinheit ist vorzugsweise als Cloud ausgebildet und dient zur Sammlung der als Zeitreihen A,B,C hinterlegten Parameter x1,x2,x3.

Vorzugsweise ist der lernfähige Algorithmus A auf der Recheneinheit RE installiert. Zum Anlernen des lernfähigen Algorithmus Alg dient vorzugsweise eine weitere Recheneinheit.

Parameter x1,x2,x3 können mittels Sensoren 9 erfasste Drehmomente D, Drehzahlen w und/oder die Bahnspannung BS sein.

Das Drehmoment D und/oder die Drehzahl w wird vorteilhaft der Stromversorgung für die jeweiligen Motoren bereitgestellt.

Parameter x1,x2,x3 können auch Steuerungsgrößen und/oder Regelungsgrößen sein, die beispielhaft von der Steuereinrichtung 7 bereitgestellt werden.

**FIG 2** zeigt ein beispielhaftes Verfahren. Das beispielhafte Verfahren dient zur Bestimmung der Position eines Bahnabrisses BA einer faserhaltigen Warenbahn 1.

In einem ersten Schritt V101 werden die Parameter x1,x2,x3, insbesondere die Drehzahlen w und die Drehmomente D der jeweiligen Rolle 3,3', erfasst. Optional wird die Bahnspannung BS anhand von Drehzahlen w jeweils zweier benachbarter Rollen 3,3' bestimmt. Optional wird die Bahnspannung BS oder ein sonstiger Parameter X1,x2,x3 als Zeitreihe A,B,C hinterlegt.

In einem zweiten Verfahrensschritt V201 erfolgt die Bestimmung einer ersten Abweichung Δ1 und/oder einer zweiten Abweichung Δ2. Die erste Abweichung Δ1 wird mit Hilfe von ersten Schritten (V102,...,V702) bestimmt. Die zweite Abweichung Δ2 wird mit Hilfe von zweiten Schritten (V103,...,V603) bestimmt.

Vorteilhaft laufen erste Schritte (V102,...,V702) und zweite Schritte (V103,...,V603) gemeinsam ab, um die Position eines erfolgten oder drohenden Bahnabrisses zu bestimmen.

Die erste und zweite Abweichung Δ1,Δ2 ist beispielhaft eine Differenz eines Wertes einer Bahnspannung BS von einer gemittelten Bahnspannung <BS>. Die jeweilige Abweichung Δ1,Δ2 kann auch eine Differenz zweier Drehzahlen w, insbesondere einer Drehzahl w einer ersten Rolle 3 von der Drehzahl w einer zweiten Rolle 3' sein. Alternativ kann die Abweichung Δ eine Differenz von Drehmomenten D von einer ersten Rolle 3 und einer zweiten Rolle 3' sein.

In einem dritten Verfahrensschritt V301 erfolgt vorteilhaft die Bestimmung der Position des Bahnabrisses BA anhand der zumindest einen Abweichung Δ1,Δ2.

Die Position des Bahnabrisses BA wird vorzugsweise einem Benutzer mit Hilfe einer Anzeige angezeigt. Vorteilhaft ist die Anzeige mobil, beispielhaft als Tablet oder Handheld-Device, ausgebildet.

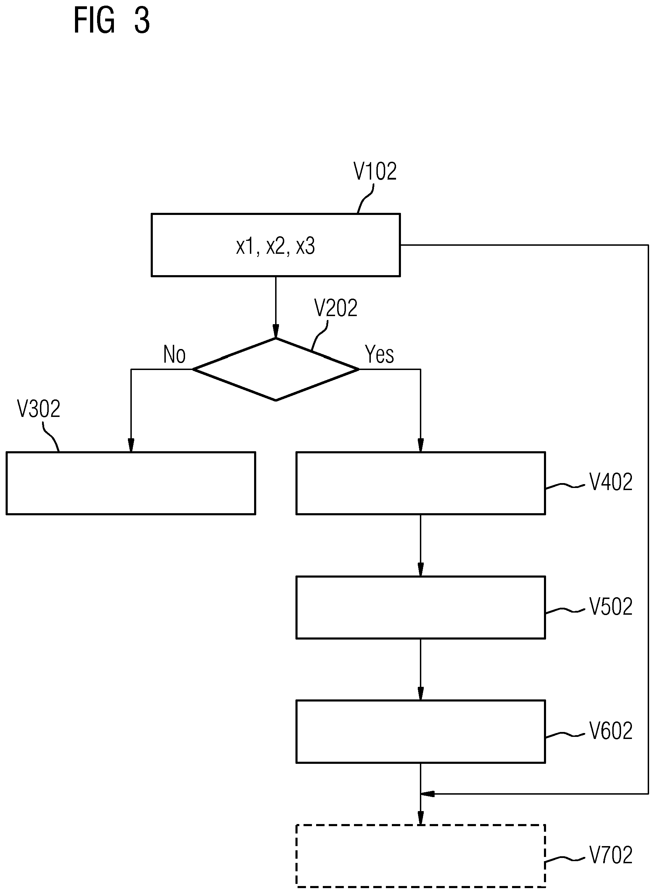

**FIG 3** zeigt ein weiteres beispielhaftes Verfahren. Das weitere beispielhafte Verfahren dient vorzugsweise der Voraussage der Position eines erfolgten oder drohenden Bahnabrisses BA.

In dem hier gezeigten Verfahren werden erste Schritte (V102,...,V702) ausgeführt.

In einem ersten Schritt V102 werden die Parameter x1,x2,x3 von der industriellen Anlage 100 erfasst. Die Erfassung der Parameter x1,x2,x3 erfolgt vorteilhaft durch Sensoren 9. Mit Hilfe der Parameter x1,x2,x3 wird jeweils die Bewegung der jeweiligen Rolle 3,3' in der industriellen Anlage 100 beschrieben. Vorteilhaft werden die Parameter x1,x2,x3 in Form von Zeitreihen A,B,C hinterlegt. Die Hinterlegung erfolgt vorteilhaft in einer Datenbank, die auf einer weiteren Recheneinheit, insbesondere einer Cloud, gespeichert ist.

In einem zweiten Schritt V202 wird überprüft, ob sich ein Parameter x1,x2,x3 überhaupt verändert hat. Falls sich der Parameter x1,x2,x3 nicht verändert hat, wird ein neuer Parameter x1,x2,x3 ausgewählt und auf eine Veränderung überprüft. Dies ist insbesondere ein Test, ob der jeweilige Parameter x1,x2,x3 der vorgebbaren Verteilung Vert entspricht.

Der bisher ausgewählte Parameter x1,x2,x3 wird in einem dritten Schritt V302 verworfen.

Alternativ oder zusätzlich kann im zweiten Schritt V202 der Parameter x1,x2,x3 derart untersucht werden, ob der jeweilige Parameter x1,x2,x3 einer vorgebbaren Verteilung, beispielhaft einer Gaußschen Normalverteilung, entspricht. So können natürliche Schwankungen des jeweiligen Parameters x1,x2,x3 berücksichtigt werden.

Bei Verwerfen des jeweiligen Parameters x1,x2,x3 erfolgt die Untersuchung eines weiteren Parameters x1,x2,x3 mit Hilfe des zweiten Schrittes V202.

In einem vierten Schritt V402 werden diejenigen Parameter x1,x2,x3, die sich mit der Zeit t verändert haben und/oder nicht der vorgebbaren Verteilung entsprechen, auf eine erste Abweichungen Δ1 hin untersucht und die erste Abweichungen Δ1 bestimmt und hinterlegt.

In einem fünften Schritt V502 wird geprüft, ob die jeweiligen ersten Abweichungen Δ1 bei einer Mehrzahl von Rollen 3,3' in einer Gruppe 4,4' ähnlich sind. Hierbei werden vorteilhaft jeweils die Parameter x1,x2,x3 einer ersten Rolle 3 mit den Parametern x1,x2,x3 einer zweiten Rolle 3' verglichen.

Alternativ kann auch geprüft werden, ob bei einer Mehrzahl von ersten Rollen 3 eine Abweichung Δ1 feststellbar ist. Im Falle einer Abweichung Δ1 bei nur einer ersten Rolle 3 oder einer einzelnen zweiten Rolle 3' ist in der Regel von einem Messfehler auszugehen.

In einem sechsten Schritt V602 wird anhand der ersten Abweichungen Δ1 mit Hilfe eines lernfähigen Algorithmus Alg festgestellt, ob ein Bahnabriss BA der faserhaltigen Warenbahn 1 droht oder bereits erfolgt ist. Anhand einer Zuordnung der ersten Abweichung Δ1 zu einer Rolle 3,3' des Bereichs zwischen zwei benachbart angeordneten Gruppen 4,4' kann ermittelt werden, wo ein Bahnabriss BA auftreten wird oder aufgetreten ist.

Bei einem drohenden Bahnabriss BA erfolgt vorteilhaft ein Warnsignal. Vorteilhaft wird dem Empfänger des Warnsignals auch die voraussichtliche Position des Bahnabrisses BA mitgeteilt.

Vorteilhaft stellt der Benutzer die Information bereit, ob die angezeigte Position des Bahnabrisses BA korrekt war und/oder ob ein Bahnabriss BA wirklich eingetreten ist.

In einem optionalen siebten Schritt V702 erfolgt vorteilhaft ein Anlernen des lernfähigen Algorithmus Alg. Der lernfähige Algorithmus Alg wird anhand eines Vergleichs der Parameter x1,x2,x3 mit den aufgetretenen Bahnabrissen BA angelernt. Durch das Anlernen kann das Erkennen des Bahnabrisses BA des lernfähigen Algorithmus Alg verbessert werden.

Dem lernfähigen Algorithmus werden neben den ersten Abweichungen Δ1 und der jeweiligen Position des erfolgten oder drohenden Bahnabrisses BA die Zeitreihen A,B,C des jeweiligen Parameters x1,x2,x3 bereitgestellt. Durch die Bereitstellung der Parameter x1,x2,x3 und insbesondere der Position des erfolgten Bahnabrisses BA der faserhaltigen Warenbahn 1 kann der lernfähige Algorithmus verbessert angelernt werden und Pattern bzw. Peaks leichter und mit höherer Sicherheit erkennen.

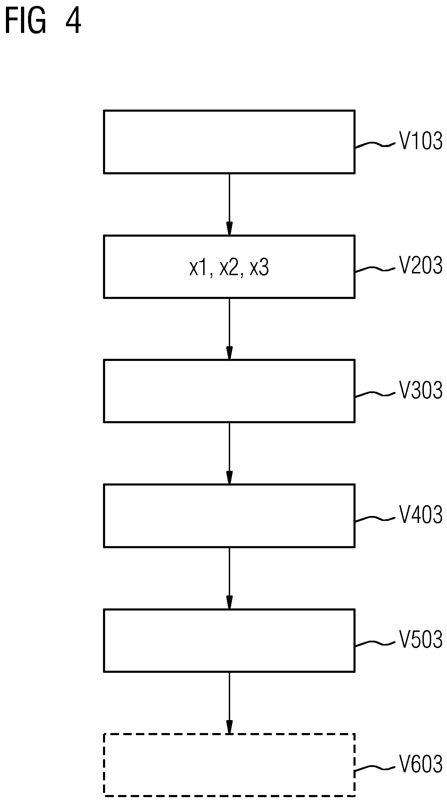

**FIG 4** zeigt ein weiteres beispielhaftes Verfahren. In dieser Figur werden zweite Schritte (V103,...,V603) beschrieben. In einem ersten Schritt V103 erfolgt ein Startsignal. Das Startsignal kann das Auftreten eines Bahnabrisses BA sein. Alternativ oder zusätzlich kann das Startsignal ein sich regelmäßiges wiederholendes Zeitsignal darstellen.

In einem zweiten Schritt V203 erfolgt ein Einlesen der Zeitreihen A,B,C und damit der Parameter x1,x2,x3. Die Zeitreihen A,B,C sind in der Regel hinterlegte Parameter x1,x2,x3 als Funktion der Zeit t.

In einem dritten Schritt V303 erfolgt anhand bereitgestellter Parameter x1,x2,x3 eine Bestimmung der jeweiligen Bahnspannungen BS der faserhaltigen Warenbahn 1. Die Bahnspannung BS wird jeweils einem Bereich der faserhaltigen Warenbahn 1 zwischen zwei jeweils benachbarten Rollen 3,3' und/oder einem Bereich zwischen zwei Gruppen 4,4' von Rollen 3,3' zugeordnet.

Alternativ oder zusätzlich werden die Bereiche der faserhaltigen Warenbahn 1 bestimmt, bei denen die Bahnspannung BS stark verringert ist.

Optional werden Zeitpunkte bestimmt, bei denen zumindest ein Parameter x1,x2,x3 einer signifikanten Änderung unterliegt.

In einem vierten Schritt V403 wird ermittelt, ob es Zeitbereiche dt gibt, in denen eine Mehrzahl von Parametern x1,x2,x3 ein entsprechendes Verhaltensmuster zeigen.

Ein Verhalten ist insbesondere das Auftreten einer zweiten Abweichung Δ2, wobei die zweite Abweichung Δ2 eine Abweichung des jeweiligen Parameters x1,x2,x3 von dem jeweiligen zeitlichen Mittelwert <x1>,<x2>,<x3> des Parameters x1,x2,x3 ist. Als gut geeigneter Parameter x1,x2,x3 dient die Bahnspannung BS zwischen jeweils zwei Rollen 3,3'.

Anhand des Verhaltensmusters kann festgestellt werden, ob und wo ein Bahnabriss BA der faserhaltigen Warenbahn 1 aufgetreten ist und aufzutreten droht.

In einem fünften Schritt V503 erfolgt die Angabe der Position des aufgetretenen oder des zu erwartenden Bahnabrisses BA der faserhaltigen Warenbahn 1 an einen Benutzer.

In einem optionalen sechsten Schritt V603 erfolgt das Anlernen eines lernfähigen Algorithmus Alg anhand der festgestellten oder zu erwartenden Position des Bahnabrisses BA. Vorteilhaft gibt ein Benutzer hierzu Angaben, ob und/oder an welcher Position in der industriellen Anlage 100 der Bahnabriss BA aufgetreten ist.

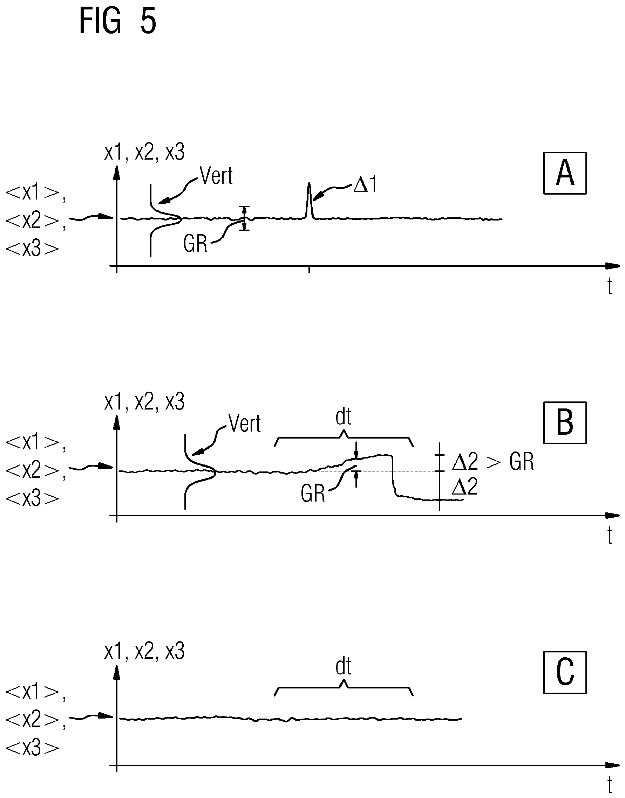

**FIG 5** zeigt Zeitreihen A,B,C. Eine erste Zeitreihe A zeigt einen Verlauf eines Parameters x1,x2,x3 als Funktion der Zeit t. Bei einem Zeitpunkt ist ein kurzer Anstieg des Parameters x1,x2,x3 sichtbar. Der Parameter x1,x2,x3 überschreitet zu keinem weiteren Zeitbereich dt den vorgebbaren Grenzwert GR. Weiter ist eine vorgebbare Verteilung Vert der Parameter x1,x2,x3 bei der jeweiligen Zeitreihe A,B,C zugeordnet. Eine solche Abweichung kann eine erste Abweichung Δ1 sein.

Insbesondere, falls nur ein einzelner Parameter x1,x2,x3, beispielhaft die Drehzahl w einer Rolle 3,3' oder ein Drehmoment D einer Rolle 3,3', über den Grenzwert GR herausragt, kann in der Regel von einem Messfehler ausgegangen werden. Vorteilhaft ist ein angelernter lernfähiger Algorithmus Alg in der Lage, dies zu erkennen.

Gezeigt ist überdies eine vorgebbare Verteilung Vert, nach der das Rauschen des jeweiligen Parameters x1,x2,x3 beschreibbar ist.

Die zweite Zeitreihe B zeigt ein Verhalten entsprechend eines Bahnabrisses BA. Kennzeichnend für den Bahnabriss BA ist ein linearer Drift des einen Parameters x1,x2,x3. Ein Drift kann auch nicht-linear sein. Der Drift tritt in dem Zeitbereich dt über den Grenzwert GR heraus. Die zweite Abweichung Δ2 nimmt während des Drift zu. Ein solcher Parameter x1,x2,x3 kann die Bahnspannung BS der faserhaltigen Warenbahn 1 zwischen zwei Gruppen 4,4' sein.

Im weiteren Verlauf erfolgt ein Abfall des hier gezeigten Parameters x1,x2,x3. Dieser Abfall ist ein Erkennungszeichen für einen Bahnabriss BA und dieses Verhalten wird vorteilhaft von einem lernfähigen Algorithmus Alg erkannt und dem Benutzer mitgeteilt.

Die dritte Zeitreihe C zeigt einen Verlauf eines Parameters x1,x2,x3 über die Zeit t hinweg. Bis auf geringe Abweichungen entspricht der jeweilige Parameter x1,x2,x3 dem jeweiligen Mittelwert <x1>,<x2>,<x3>.

Zusammenfassend betrifft die Erfindung ein Verfahren und eine Vorrichtung, insbesondere zur Vorhersage einer Position eines erfolgten oder drohenden Bahnabrisses BA einer faserhaltigen Warenbahn 1. Darüber hinaus betrifft die Erfindung ein Computerprogrammprodukt und eine industrielle Anlage 100, insbesondere eine Papiermaschine. Das Verfahren umfasst die Erfassung von Parametern x1,x2,x3, insbesondere Drehzahlen w von Rollen 3,3' zum Transport der faserhaltigen Warenbahn 1 oder eine Bahnspannung BS derselben. Die Parameter x1,x2,x3 werden vorteilhaft in Form von Zeitreihen A,B,C hinterlegt. Ein selbstlernender Algorithmus Alg dient zum Erkennen des drohenden Bahnabrisses BA sowie zu einer Ermittlung der Position des drohenden und/oder erfolgten Bahnabriss BA. Grundlage für das Erkennen oder die Ermittlung ist eine Abweichung Δ des jeweiligen Parameters x1,x2,x3, beispielhaft von einem zeitlichen Mittelwert <x1>,<x2>,<x3> des jeweiligen Parameters x1,x2,x3.

## Patentansprüche

1. Verfahren, insbesondere zur Bestimmung und Vorhersage einer Position eines erfolgten oder drohenden Bahnabrisses (BA) einer faserhaltigen Warenbahn (1) in einer industriellen Anlage (100), wobei die industrielle Anlage (100) eine Mehrzahl von Rollen (3,3') aufweist, wobei die Rollen (3,3') (drehbar mit Motor gekoppelt) zum Transport der faserhaltigen Warenbahn (1) in der industriellen Anlage (100) vorgesehen sind, wobei das Verfahren zumindest folgende erste Schritte (V103,...,V603) umfasst:
- Bereitstellung und optional Hinterlegung von Parametern (x1,x2,x3), wobei der jeweilige Parameter (x1,x2,x3) jeweils zumindest einer Rolle (3,3') zugeordnet ist;
- Überprüfen, ob ein Parameter (x1,x2,x3) im zeitlichen Verlauf einer vorgebbaren Verteilung (Vert), insbesondere einer Normalverteilung, entspricht;
- entspricht der zeitliche Verlauf des jeweiligen Parameters (x1,x2,x3) der vorgebbaren Verteilung (Vert), wird ein weiterer Parameter (x1,x,x3) auf die Verteilung geprüft;
- Entspricht der zeitliche Verlauf des weiteren Parameters (x1,x2,x3) nicht der Verteilung (Vert), so erfolgt eine Überprüfung des zeitlichen Verlaufes des Parameters (x1,x2,x3) auf eine erste Abweichung (Δ1) hin.

2. Verfahren nach Anspruch 1, weiter umfassend folgende zweite Schritte (V102,...,V702):
- Bestimmung einer zweiten Abweichung (Δ2) zumindest eines Parameters (x1,x2,x3) oder einer zeitlichen Änderung des jeweiligen Parameters (x1,x2,x3);
- Vergleich des jeweiligen Parameters (x1,x2,x3) und/oder der jeweiligen zeitlichen Änderung des jeweiligen Parameters (x1,x2,x3) mit jeweils einem vorgebbaren Grenzwert (GR);
- wobei mit Hilfe eines lernfähigen Algorithmus (Alg) die erste Abweichung (Δ1) erkannt wird und/oder die erste Abweichung (Δ1) zumindest einer Rolle (3,3') für den erfolgten oder drohenden Bahnabriss (BA) der faserhaltigen Warenbahn (1) zugeordnet wird.

3. Verfahren nach einem der vorangehenden Ansprüche, wobei die erste Abweichung (Δ1) des jeweiligen Parameters (x1,x2,x3) mit den ersten Schritten (V103,...,V603) und die zweite Abweichung (Δ2) mit Hilfe der zweiten Schritte (V102,...,V702) ermittelt wird, wobei mit Hilfe der ersten Abweichung (Δ1) eine erste Position des erfolgten oder drohenden Bahnabrisses (BA) ermittelt wird und wobei mit Hilfe der zweiten Abweichung (Δ2) eine zweite Position des drohenden oder erfolgten Bahnabriss (BA) ermittelt wird, wobei bei Übereinstimmung der ersten Position und der zweiten Position die jeweilige Position einem Benutzer angezeigt wird.

4. Verfahren nach einem der Ansprüche 1 bis 3, wobei falls die erste Position und die zweite Position eines erfolgten Bahnabrisses (BA) unterschiedlich sind, eine Ermittlung der Position des Bahnabrisses, vorzugsweise mit Hilfe einer visuellen Überwachung, erfolgt, und die ermittelte Position des erfolgten Bahnabrisses (BA) dem lernfähigen Algorithmus (Alg) bereitgestellt wird, so dass der lernfähige Algorithmus (Alg) anhand der Position des erfolgten Bahnabrisseses (BA) verbessert wird.

5. Verfahren nach einem der vorangehenden Ansprüche, wobei dem lernfähigen Algorithmus (Alg) die Parameter (x1,x2,x3), die ermittelte Position des erfolgten Bahnabrisses (BA) und/oder die jeweils ermittelte erste und/oder zweiten Abweichung (Δ1,Δ2) bereitgestellt werden.

6. Verfahren nach einem der vorangehenden Ansprüche, wobei zur Feststellung eines drohenden Bahnabrisses (BA) die ersten Schritte (V103,...,V603) und/oder die zweiten Schritte (V102,...,V702) wiederholt, insbesondere periodisch, ablaufen.

7. Verfahren nach einem der vorangehenden Ansprüche, wobei zur Feststellung der Position des erfolgten Bahnabrisses (BA) die ersten Schritte (V103,...,V603) und/oder die zweiten Schritte (V102,...,V702) nach dem erfolgten Bahnabriss (BA) durchgeführt werden.

8. Verfahren nach Anspruch 7, wobei der jeweilig hinterlegte Parameter in einem Zeitbereich (dt) auf eine erste Abweichung hin untersucht wird, wobei der Zeitbereich unmittelbar vor dem erfolgten Bahnabriss angeordnet ist.

9. Verfahren nach einem der vorangehenden Ansprüche, wobei die Abweichung des jeweiligen Parameters (x1,x2,x3) anhand einer Differenz des jeweiligen Parameters (x1,x2,x3) von jeweils einem zeitlichen Mittelwert (<x1>,<x2>,<x3>) des jeweiligen Parameters (x1,x2,x3) bestimmt wird.

10. Verfahren nach einem der vorangehenden Ansprüche, wobei der jeweilige Parameter (x1,x2,x3) einer Mehrzahl von Rollen (3,3') zugeordnet ist, wobei der jeweilige Parameter die Bewegung jeweils benachbarter Rollen (3,3') abbildet.

11. Verfahren nach einem der vorangehenden Ansprüche, wobei ein Anlernen des lernfähigen Algorithmus (Alg) anhand eines Vergleiches des jeweiligen Parameters (x1,x2,x3) in einem Zeitbereich (dt) vor einem erfolgten Bahnabriss (BA) mit den jeweiligen Parameter (x1,x2,x3) in einem Zeitbereich (dt) während eines Normalbetriebes der industriellen Anlage (100) erfolgt.

12. Verfahren nach einem der vorangehenden Ansprüche, wobei der jeweilige Parameter:
- eine Drehzahl oder ein Drehmoment (D) der jeweiligen Rolle (3,3') oder eines Motors (5) ist, der mit der jeweiligen Rolle (3,3') gekoppelt ist;
- eine Bahnspannung (BS) der faserhaltigen Warenbahn (1) zwischen einer ersten Rolle (3) und einer zweiten Rolle (3') (Rollen jeweils benachbart) ist;
- eine Differenz von Drehzahlen (w) zweier Rollen (3,3') ist;
- ein Versorgungsstrom oder die Frequenz des Versorgungsstroms des Motors (5) ist, welcher mit der jeweiligen Rolle gekoppelt ist;
- ein Regelungsparameter für den jeweiligen Motor (5) ist;

13. Verfahren nach einem der vorangehenden Ansprüche, wobei die erste Abweichung (Δ1) lediglich nach dem erfolgten Bahnabriss bestimmt wird und wobei die erste und/oder zweite Abweichung (Δ2, Δ1) wiederholt, vorzugsweise periodisch, bestimmt werden.

14. Verfahren nach einem der vorangehenden Ansprüche, wobei zumindest eine erste Rolle (3) einer ersten Gruppe (4) zugeordnet ist, wobei zumindest eine zweite Rolle (3') einer zweiten Gruppe (4') zugeordnet ist,
- wobei eine erste und/oder zweite Abweichung (Δ1,Δ2) des Parameters (x1,x2,x3) der zumindest einen ersten Rolle (3) bestimmt wird;
- wobei eine erste und/oder zweite Abweichung (Δ1,Δ2) des Parameters (x1,x2,x3) der zumindest einen zweiten Rolle (3') bestimmt wird;
- und/oder wobei eine erste und/oder zweite Abweichung (Δ1,Δ2) des Parameters (x1,x2,x3) der zumindest einen ersten Rolle (3) von der zumindest einen zweiten Rolle (3') bestimmt wird.

15. Vorrichtung, insbesondere zur Bestimmung eines erfolgten oder drohenden Bahnabrisses (BA) einer faserhaltigen Warenbahn (1) in einer industriellen Anlage (100), umfassend:
- Erfassungsmittel für Parameter (x1,x2,x3), wobei der jeweilige Parameter (x1,x2,x3) zur Beschreibung der Bewegung zumindest einer Rolle (3,3') ausgebildet ist;
- Eine Anzeige zum Anzeigen des drohenden oder erfolgten Bahnabrisses (BA);
wobei der Vorrichtung eine Recheneinheit (RE) zugeordnet ist, wobei die Recheneinheit (RE) zur Bestimmung der Position eines drohenden oder erfolgten Bahnabrisses (BA) mit Hilfe eines Verfahrens gemäß einem der vorangehenden Ansprüche vorgesehen ist.

16. Computerprogrammprodukt zum Ablauf auf einer Recheneinheit, wobei das Computerprogrammprodukt beim Ablauf auf einer Recheneinheit (RE) zur Durchführung eines Verfahrens nach einem der Ansprüche 1 bis 14 ausgebildet ist.

17. Industrielle Anlage (100), insbesondere eine Trockenpartie einer Papiermaschine oder eine Papiermaschine, aufweisend eine Vorrichtung nach Anspruch 15.
